# EUROPÄISCHE PATENTSCHRIFT

(11) **EP 3 841 627 B1**
(45) Veröffentlichungstag und Bekanntmachung des Hinweises auf die Patenterteilung: **20.03.2024**
(21) Anmeldenummer: 19759305.6
(22) Anmeldetag: 14.08.2019
(51) Int. Cl.: H01M 10/42, H01M 50/204, H01M 50/258, H01M 50/503, B60L 50/64, H01M 50/51

(54) **BATTERIEEINHEIT, VERFAHREN ZUM ELEKTRISCHEN VERSCHALTEN VON ZELLBLÖCKEN EINER BATTERIEEINHEIT UND VERFAHREN ZUM AUFTRENNEN EINER ELEKTRISCHEN VERSCHALTUNG VON ZELLBLÖCKEN EINER BATTERIEEINHEIT**
BATTERY UNIT, METHOD FOR ELECTRICALLY INTERCONNECTING CELL BLOCKS OF A BATTERY UNIT AND METHOD FOR DISCONNECTING AN ELECTRICAL INTERCONNECTION OF CELL BLOCKS OF A BATTERY UNIT
UNITÉ BATTERIE, PROCÉDÉ DE CONNEXION ÉLECTRIQUE DE BLOCS D'ÉLÉMENTS D'UNE UNITÉ BATTERIE ET PROCÉDÉ POUR LA SÉPARATION D'UNE CONNEXION ÉLECTRIQUE DE BLOCS D'ÉLÉMENTS D'UNE UNITÉ BATTERIE

(30) Priorität: 21.08.2018 DE 102018006621
(43) Veröffentlichungstag der Anmeldung: 30.06.2021
(73) Patentinhaber: Mercedes-Benz Group AG, 70372 Stuttgart (DE)
(72) Erfinder: BLANUSA, Denis, 71696 Möglingen (DE)
(74) Vertreter: Novagraaf Group
(86) Internationale Anmeldenummer: PCT/EP2019/071804
(87) Internationale Veröffentlichungsnummer: WO 2020/038793

(56) Entgegenhaltungen:
- WO-A1-2018/065580
- WO-A2-2013/182589

## Beschreibung

Die Erfindung betrifft eine Batterieeinheit nach den Merkmalen des Oberbegriffs des Anspruchs 1, ein Verfahren zum elektrischen Verschalten von Zellblöcken einer Batterieeinheit und ein Verfahren zum Auftrennen einer elektrischen Verschaltung von Zellblöcken einer Batterieeinheit.

Aus dem Stand der Technik ist, wie in der DE 10 2011 101 352 A1 beschrieben, eine HV-Batterie, insbesondere eine Traktionsbatterie für ein Fahrzeug, bekannt. Die HV-Batterie umfasst mehrere Zellenmodule, die jeweils mehrere Zellen umfassen. Jedem Zellenmodul ist eine Steuerung zur Zellenüberwachung und/oder zum Zellenbalancing zugeordnet. Die Steuerungen sind an ein Batteriemanagement-Steuergerät für Kommunikations- oder Steuerungs- und/oder Regelzwecke angeschlossen. Die HV-Batterie ist modular ausgebildet, indem die Zellenmodule als auf einer Platine lösbar befestigbare oder befestigte Steckmodule ausgebildet sind.

In der DE 10 2008 034 876 A1 werden eine Batterie mit einer in einem Batteriegehäuse angeordneten Wärmeleitplatte zum Temperieren der Batterie und ein Verfahren zur Herstellung einer Batterie beschrieben. Mehrere mittels einer Zellverbinderplatine elektrisch parallel und/oder seriell miteinander verschaltete Einzelzellen sind Wärme leitend mit der Wärmeleitplatte verbunden. Es ist wenigstens ein Federelement vorgesehen, mittels dem die Einzelzellen definiert an die Wärmeleitplatte pressbar sind. An der Zellverbinderplatine oder an der Wärmeleitplatte sind ein oder mehrere Vorspannelemente zu einer Vorspannung und Befestigung des Federelementes angeordnet.

Aus der DE 10 2013 020 942 A1 ist ein Verfahren zur Wartung, Reparatur und/oder Optimierung einer Batterie bekannt. Die Batterie umfasst als Komponenten eine Anzahl von seriell und/oder parallel miteinander verschalteten Einzelzellen mit elektrischen Polkontakten, welche zur elektrischen Verschaltung direkt oder mittels Zellverbindern unter Bildung eines Überlappungsbereichs form- und/oder stoffschlüssig miteinander verbunden sind, und/oder eine Batterieüberwachungseinheit mit einer Anzahl von Anschlusselementen, welche mit den elektrischen Polkontakten und/oder mit den Zellverbindern form- und/oder stoffschlüssig unter Bildung eines weiteren Überlappungsbereichs verbunden sind. Zum Austausch einer Komponente wird die form- und/oder stoffschlüssige Verbindung der auszutauschenden Komponente mit mindestens einer nicht auszutauschenden Komponente unmittelbar neben dem Überlappungsbereich getrennt und eine Ersatzkomponente wird mittels deren elektrischer Polkontakte oder deren Anschlusselementen mit den Überlappungsbereichen der mindestens einen nicht auszutauschenden Komponente unter Bildung eines jeweils neuen Überlappungsbereichs form- und/oder stoffschlüssig verbunden.

Eine gattungsgemäße Batterieeinheit ist aus der WO 2013/0182589 A2 grundlegend bekannt. Zum weiteren Stand der Technik kann auf die WO 2018/065580 A1 verwiesen werden.

Der Erfindung liegt die Aufgabe zu Grunde, eine gegenüber dem Stand der Technik verbesserte Batterieeinheit, ein gegenüber dem Stand der Technik verbessertes Verfahren zum elektrischen Verschalten von Zellblöcken einer Batterieeinheit und ein gegenüber dem Stand der Technik verbessertes Verfahren zum Auftrennen einer elektrischen Verschaltung von Zellblöcken einer Batterieeinheit anzugeben.

Die Aufgabe wird erfindungsgemäß gelöst durch eine Batterieeinheit mit den Merkmalen des Anspruchs 1, ein Verfahren zum elektrischen Verschalten von Zellblöcken einer Batterieeinheit mit den Merkmalen des Anspruchs 8 und ein Verfahren zum Auftrennen einer elektrischen Verschaltung von Zellblöcken einer Batterieeinheit mit den Merkmalen des Anspruchs 9.

Vorteilhafte Ausgestaltungen der Erfindung sind Gegenstand der Unteransprüche.

Eine Batterieeinheit, insbesondere für ein Fahrzeug, umfasst mehrere Zellblöcke, welche jeweils eine Mehrzahl elektrisch, insbesondere seriell und/oder parallel, miteinander verschalteter Einzelzellen umfassen.

Erfindungsgemäß sind mehrere Kontaktschlüsselelemente vorgesehen, wobei das jeweilige Kontaktschlüsselelement einen Kontaktbereich oder mehrere Kontaktbereiche aufweist und außerhalb des Kontaktbereichs oder der mehreren Kontaktbereiche elektrisch isolierend ausgebildet ist, wobei durch ein Bewegen der Kontaktschlüsselelemente nacheinander in ihre jeweilige Kontaktposition die Zellblöcke mittels der Kontaktbereiche zunächst miteinander elektrisch, insbesondere seriell, zu verschalten sind und abschließend mit elektrischen Anschlusskontakten elektrisch zu kontaktieren sind. Die mehreren Kontaktschlüsselelemente und eine Zellblockanordnung, umfassend die Zellblöcke, sind derart ausgebildet, um dies zu ermöglichen. Insbesondere ist das Kontaktschlüsselelement oder sind die mehreren Kontaktschlüsselelemente entsprechend geometrisch codiert. Das Kontaktschlüsselelement oder die Kontaktschlüsselelemente verbleibt/verbleiben vorteilhafterweise in der Batterieeinheit, d. h. die beschriebene Bewegung erfolgt in der Batterieeinheit, insbesondere durch zunehmendes Hineinschieben zum elektrischen Kontaktieren und durch zunehmendes Herausziehen zum Auftrennen der elektrischen Kontaktierung, jedoch erfolgt vorteilhafterweise kein vollständiges Entfernen aus der Batterieeinheit, so dass das Kontaktschlüsselelement oder die Kontaktschlüsselelemente nicht verlorengehen und/oder falsch positioniert werden können.

Erfindungsgemäß weisen die Kontaktschlüsselelemente jeweils eine individuelle Ausformung auf, welche korrespondierend zu einer Aufnahmeausnehmung für das jeweilige Kontaktschlüsselelement ausgebildet ist. Dadurch wird eine falsche Handhabung unterbunden und es wird, auf besonders einfache Weise, eine korrekte elektrische Verschaltung der Zellblöcke untereinander und abschließend deren elektrische Anbindung an die Anschlusskontakte sichergestellt.

Dies kann gemäß einer vorteilhaften Weiterbildung auch dadurch unterstützt werden, dass sich die Kontaktschlüsselelemente durch eine Farbgebung und/oder eine Länge unterscheiden.

Durch die erfindungsgemäße Lösung können Arbeiten an der Batterieeinheit, welche vorteilhafterweise eine Hochvoltbatterie bildet und somit beispielsweise als eine Traktionsbatterie für ein Fahrzeug verwendet werden kann, sobald alle Zellblöcke elektrisch miteinander verschaltet und mit den elektrischen Anschlusskontakten verbunden sind, bei hohen Batteriespannungen vermieden werden. Durch die erfindungsgemäße Lösung kann die Batterieeinheit mechanisch fertig aufgebaut werden, ohne dass die Zellblöcke elektrisch miteinander verbunden sind. Dadurch liegt eine maximale Spannung am jeweiligen Zellblock vorteilhafterweise unterhalb einer kritischen Grenze von beispielsweise 60 Volt, so dass die Sicherheit bei Arbeiten an der Batterieeinheit erheblich verbessert wird und hierfür keine speziellen Sicherheitsmaßnahmen erforderlich sind, welche für Arbeiten unter Hochvoltbedingungen erforderlich wären. Erst mittels der mehreren Kontaktschlüsselelemente werden die Zellblöcke elektrisch miteinander und mit den elektrischen Anschlusskontakten verbunden, wodurch erst dann die entsprechend hohe Spannung an den elektrischen Anschlusskontakten anliegt.

In einer möglichen Ausführungsform sind die Zellblöcke durch das Bewegen der Kontaktschlüsselelemente nacheinander in ihre jeweilige Kontaktposition in mehreren Schritten zunehmend elektrisch, insbesondere seriell, miteinander zu verschalten, wobei in einem letzten Schritt, vor dem elektrischen Kontaktieren mit den elektrischen Anschlusskontakten, alle Zellblöcke elektrisch miteinander zu verschalten sind. Das eine Kontaktschlüsselelement oder die mehreren Kontaktschlüsselelemente und die Zellblockanordnung, umfassend die Zellblöcke, sind derart ausgebildet, um dies zu ermöglichen. Insbesondere sind die mehreren Kontaktschlüsselelemente entsprechend geometrisch codiert. Auf diese Weise erfolgt zunächst eine stufenweise elektrisch insbesondere serielle Verschaltung der Zellblöcke und dadurch ein Hochschalten von mehreren elektrischen Serienverschaltungen von Zellblöcken, wodurch die elektrischen Spannungen dieser elektrischen Serienverschaltungen zunehmend erhöht werden, bis zuletzt an den elektrischen Anschlusskontakten, nachdem diese mit den Zellblöcken elektrisch kontaktiert sind, die Hochvoltspannung der nun fertig verschalteten Batterie anliegt, welche beispielsweise zum Antrieb eines Fahrzeugs erforderlich ist.

Insbesondere in einem Fehler-, Reparatur- oder Wartungsfall können die elektrischen Verschaltungen der Zellblöcke durch ein entsprechendes Zurückbewegen der Kontaktschlüsselelemente aus ihren Kontaktpositionen auf einfache Weise wieder aufgetrennt werden, wodurch wieder Teilspannungen der Zellblöcke hergestellt werden, die unterhalb der kritischen Grenze von beispielsweise 60 Volt Gleichspannung, wodurch ein Handhaben und Arbeiten insbesondere ohne eine Hochvoltspezifikation zulässig ist.

Da des Weiteren bei dieser Lösung die elektrischen Verschaltungen der Zellblöcke nicht bereits während der mechanischen Ausbildung der Zellblockanordnung hergestellt werden, sondern erst abschließend, können keine während der Herstellung unerkannten Verbindungsfehler auftreten, welche ein vollständiges Zerlegen erforderlich machen würden. Da die elektrischen Verschaltungen der Zellblöcke letzte Schritte der Fertigstellung der einsatzbereiten Batterie sind, können möglicherweise auftretende Kontaktfehler einfach behoben werden, beispielsweise durch Austausch eines fehlerhaften Kontaktschlüsselelementes. Im Stand der Technik erfolgt die elektrische Verschaltung der Zellblöcke beispielweise durch Löten während der mechanischen Ausbildung der Batterie, so dass hierbei auftretende Kontaktfehler durch Demontage der Batterie und insbesondere durch Auftrennen der Verlötungen wesentlich aufwändiger als bei der erfindungsgemäßen Lösung repariert werden müssen.

Vorteilhafterweise sind die Kontaktschlüsselelemente von außen, insbesondere von außerhalb eines Batteriegehäuses oder zumindest von außerhalb der mechanisch miteinander verbundenen Zellblöcke, insbesondere von außerhalb der Zellblockanordnung bewegbar.

Dadurch wird sichergestellt, dass Kontakte mittels der Kontaktbereiche zu kontaktierende Kontakte an den Zellblöcken nicht von außen berührt werden können, so dass keine Gefahr eines elektrischen Kontakts nach außen möglich ist. Die Kontakte der Zellblock sind frühestens dann erreichbar und berührbar, wenn die elektrischen Verbindungen zwischen den Zellblöcken aufgetrennt sind Die Kontaktschlüsselelemente ist/sind des Weiteren vorteilhafterweise durch die Anordnung des jeweiligen Kontaktbereichs und der elektrischen Isolierung derart ausgebildet, dass auch der jeweilige Kontaktbereich erst erreichbar und somit berührbar ist, wenn er keine elektrische Verbindung mehr zu den Zellblöcken hat, um auch dadurch eine Weiterleitung einer hohen Spannung nach außen zu vermeiden.

Beispielsweise ist mindestens eines der Kontaktschlüsselelemente stabförmig ausgebildet, wobei bei mehreren Kontaktbereichen diese in Längsausdehnung des stabförmigen Kontaktschlüsselelementes hintereinander angeordnet sind, oder mindestens eines der Kontaktschlüsselelemente ist kammförmig ausgebildet, wobei mehrere Kontaktbereiche kammzinkenartig nebeneinander an einem Kammgrundkörper angeordnet sind. Die jeweilige Ausbildung richtet sich insbesondere nach der Anordnung der Zellblöcke und deren mit dem jeweiligen Kontaktschlüsselelement zu kontaktierenden elektrischen Kontakten.

Bei mehreren nebeneinander angeordneten symmetrischen Zellblocksträngen sind vorteilhafterweise symmetrische Kontaktschlüsselelemente für die Zellblockstränge vorgesehen. Dadurch werden eine symmetrische elektrische Verschaltung der Zellblöcke der Zellblockstränge und die abschließende elektrische Verschaltung der Zellblockstränge miteinander und mit den elektrischen Anschlusskontakten ermöglicht. Die Zellblockstränge weisen somit in jedem Stadium der zunehmenden elektrischen Verschaltung ihrer Zellblöcke jeweils die gleiche Spannung auf. Zudem wird durch diese Symmetrie die korrekte Handhabung der Kontaktschlüsselelemente vereinfacht, da mehrere gleiche Steckvarianten und somit weniger unterschiedliche Steckvarianten der Kontaktschlüsselelemente existieren, welche die Handhabung, insbesondere die Reihenfolge der Bewegung der Kontaktschlüsselelemente, verkomplizieren würden.

Beispielsweise sind die symmetrischen Kontaktschlüsselelemente über ein gemeinsames Handhabungselement miteinander verbunden. Dadurch können diese Kontaktschlüsselelemente gemeinsam bewegt werden, wodurch ein Zeitaufwand hierfür verringert ist. Alternativ oder zusätzlich kann beispielsweise vorgesehen sein, dass mindestens eines der kammartigen Kontaktschlüsselelemente symmetrisch ausgebildet ist, d. h. Zinken aufweist, die für mehrere symmetrische Zellblockstränge vorgesehen sind. Dadurch wird insbesondere ein Zeitaufwand zum elektrischen Verbinden der Zellblockstränge reduziert.

In einem erfindungsgemäßen Verfahren zur elektrischen Verschaltung der Zellblöcke der Batterieeinheit werden die mehreren Kontaktschlüsselelemente nacheinander in ihre jeweilige Kontaktposition bewegt, wodurch die Zellblöcke mittels der Kontaktbereiche zunächst miteinander elektrisch verschaltet werden und abschließend mit den elektrischen Anschlusskontakten elektrisch kontaktiert werden. Das Verfahren ermöglicht auf einfache und sichere Weise das Ausbilden der einsatzfähigen Batterie, insbesondere Hochvoltbatterie, aus der Batterieeinheit durch elektrisches Verschalten der Zellblöcke und deren elektrische Kontaktierung mit den elektrischen Anschlusskontakten.

In einem erfindungsgemäßen Verfahren zum Auftrennen einer elektrischen Verschaltung der Zellblöcke der Batterieeinheit werden die mehreren Kontaktschlüsselelemente nacheinander aus ihrer jeweiligen Kontaktposition entfernt, wodurch zunächst der elektrische Kontakt der Zellblöcke mit den elektrischen Anschlusskontakten aufgetrennt wird und anschließend die elektrische Verschaltung zwischen den Zellblöcken aufgetrennt wird. Das Verfahren ermöglicht auf einfache und sichere Weise Wartungs- und/oder Reparaturarbeiten an den Zellblöcken bei geringen Spannungen, wodurch insbesondere keine Sicherheitsvorkehrungen für Hochvoltarbeiten erforderlich sind.

Ausführungsbeispiele der Erfindung werden im Folgenden anhand von Zeichnungen näher erläutert.

Dabei zeigen:
- Fig. 1: schematisch eine perspektivische Darstellung einer Batterieeinheit,
- Fig. 2: schematisch Kontaktschlüsselelemente der Batterieeinheit aus Figur 1,
- Fig. 3: schematisch die Batterieeinheit aus Figur 1 in einer Seitenansicht, wobei sich keines der Kontaktschlüsselelemente in ihrer jeweiligen Kontaktpositionen befindet,
- Fig. 4: schematisch die Batterieeinheit aus Figur 1 in einer Seitenansicht, wobei sich erste Kontaktschlüsselelemente in ihren jeweiligen Kontaktpositionen befinden,
- Fig. 5: schematisch die Batterieeinheit aus Figur 1 in einer Seitenansicht, wobei sich erste und zweite Kontaktschlüsselelemente in ihren jeweiligen Kontaktpositionen befinden, und
- Fig. 6: schematisch die Batterieeinheit aus Figur 1 in einer Seitenansicht, wobei sich alle Kontaktschlüsselelemente in ihren jeweiligen Kontaktpositionen befinden.

Einander entsprechende Teile sind in allen Figuren mit den gleichen Bezugszeichen versehen.

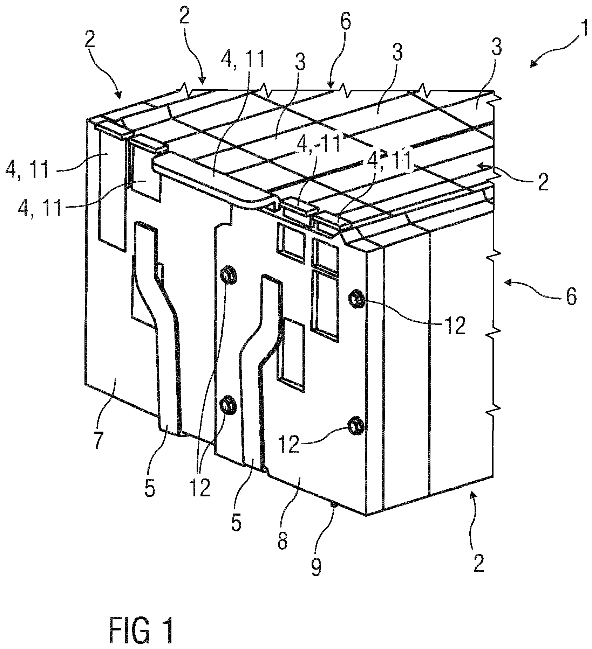

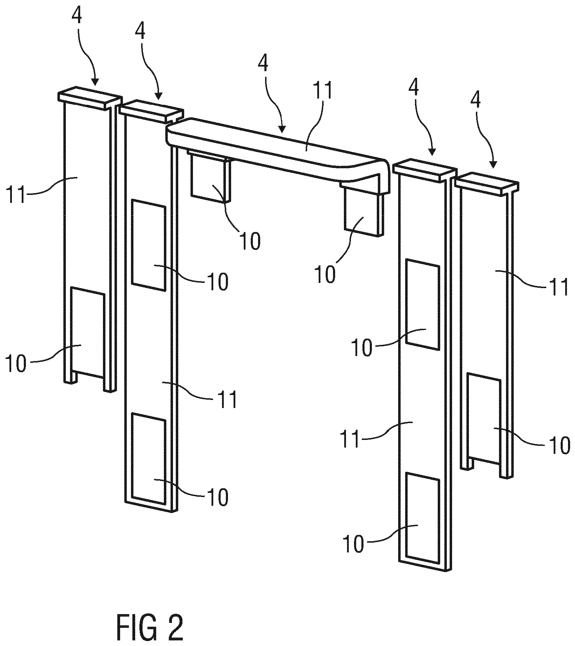

Die Figuren 1 und 3 bis 6 zeigen eine Batterieeinheit 1, insbesondere für ein Fahrzeug. Die Batterieeinheit 1 umfasst mehrere Zellblöcke 2, welche jeweils eine Mehrzahl elektrisch seriell und/oder parallel miteinander verschalteter elektrochemischer Einzelzellen 3 umfassen. Figur 2 zeigt Kontaktschlüsselelemente 4, mittels welchen diese Zellblöcke 2 zunächst miteinander elektrisch seriell zu verschalten und anschließend mit elektrischen Anschlusskontakten 5 elektrisch zu kontaktieren sind. Dadurch kann aus der Batterieeinheit 1 eine Batterie, insbesondere eine Hochvoltbatterie, für das Fahrzeug ausgebildet werden, welche insbesondere als Traktionsbatterie für das Fahrzeug verwendet werden kann, d. h. mindestens einer elektrischen Antriebsmaschine zum Antrieb des Fahrzeugs elektrische Energie zur Verfügung stellen kann.

Mittels dieser Batterieeinheit 1 wird es ermöglicht, die elektrisch serielle Verschaltung der einzelnen Zellblöcke 2 miteinander erst final vorzunehmen, d. h. insbesondere erst nach einer mechanischen Verbindung der Zellblöcke 2 zu einer Zellblockanordnung. Diese elektrisch serielle Verschaltung der einzelnen Zellblöcke 2 erfolgt mittels der insbesondere steckbaren Kontaktschlüsselelemente 4. Vorher ist die Batterieeinheit 1, da die Zellblöcke 2 noch nicht elektrisch seriell miteinander verschaltet sind, noch keine Hochvoltbatterie, so dass aufgrund der geringeren Spannung eine höhere Sicherheit im Umgang mit der Batterieeinheit 1 gegeben ist und keine für Hochvoltarbeiten erforderlichen hohen Sicherheitsvorkehrungen angewandt werden müssen.

Im hier dargestellten Beispiel ist die Batterieeinheit 1 symmetrisch aufgebaut und umfasst zwei nebeneinander angeordnete Zellblockstränge 6 mit jeweils mehreren Zellblöcken 2. Figur 1 zeigt eine Stirnseite der Batterieeinheit 1. Die Zellblöcke 2 sind bereits mechanisch verbunden, d. h. sie bilden eine Zellblockanordnung mechanisch, jedoch noch nicht elektrisch, miteinander verbundener Zellblöcke 2. Die mechanische Verbindung erfolgt im dargestellten Beispiel mittels Zugankern 12.

Die Einzelzellen 3 des jeweiligen Zellblocks 2 sind mittels Verbindungselementen 7 elektrisch miteinander verschaltet. Zumindest an der Stirnseite der Batterieeinheit 1 sind diese Verbindungselemente 7 im dargestellten Beispiel in ein Kunststoffteil 8 eingeclipst, welches die Stirnseite des jeweiligen Zellblockstrangs 6 bedeckt. In Figur 1 ist zur Verdeutlichung dieses Aufbaus auf dem rechten Zellblockstrang 6 das Kunststoffteil 8 angeordnet, während es auf dem linken Zellblockstrang 6 nicht dargestellt ist.

Die Kunststoffteile 8 auf der Stirnseite der Zellblockstränge 6 weisen an ihrer Unterseite einen Positionierstift 9 auf, welcher ein fixes Lager für die Batterieeinheit 1 beispielsweise in einem nicht dargestellten Batteriegehäuse bildet. Von außen zugänglich sind nur die elektrischen Anschlusskontakte 5 der Batterieeinheit 1, welche zur elektrischen Kontaktierung der fertiggestellten Batterie mit einem elektrischen Bordnetz des Fahrzeugs dienen. Diese elektrischen Anschlusskontakte 5 werden, wie im Folgenden noch beschrieben wird, als letztes mittels der Kontaktschlüsselelemente 4 mit den Zellblöcken 2 elektrisch kontaktiert, so dass erst dann Strom an diesen elektrischen Anschlusskontakten 5 anliegt, wenn die Batterie fertiggestellt ist. Im hier dargestellten Beispiel sind diese elektrischen Anschlusskontakte 5 als Stromschienen einer so genannten Schaltbox, die weitere Elektronikbauteile wie Schütze und Sicherungen aufweist, ausgebildet, welche in einem Batteriegehäuse vormontiert sind.

Zur Fertigstellung der Batterie, insbesondere Hochvoltbatterie, werden elektrische Kontakte der Zellblöcke 2 über die einzelnen steckbaren Kontaktschlüsselelemente 4 elektrisch seriell miteinander verbunden, wodurch die elektrische Spannung durch die elektrische Serienschaltung der Zellblöcke 2 erhöht wird.

Für jede elektrisch serielle Zusammenschaltung von Zellblöcken 2 wird ein eigenes Kontaktschlüsselelement 4 verwendet, das vorteilhafterweise so kodiert ist, dass es nur für eine spezielle Zellblockverbindung verwendet werden kann. Erst mit dem letzten passenden Kontaktschlüsselelement 4, im hier dargestellten Beispiel gemäß Figur 2 mit dem mittleren Kontaktschlüsselelement 4, wird der Anschluss aller Einzelzellen 3, d. h. der Anschluss aller nun bereits elektrisch seriell miteinander verschalteter Zellblöcke 2, an die elektrischen Anschlusskontakte 5 hergestellt. Damit ist ein Sicherheitskonzept möglich, bei dem die Spannung im Fehler-, Reparatur- und Wartungsfall auf einfache Weise wieder reduziert werden kann, indem die elektrischen Serienverbindungen durch Ziehen der Kontaktschlüsselelemente 4 wieder aufgetrennt und Teilspannungen der Zellblöcke 2 hergestellt werden können. Diese Teilspannungen liegen dann unterhalb einer kritischen Grenze von beispielsweise 60 Volt Gleichspannung und erlauben ein Handhaben und Arbeiten mit der Batterieeinheit 1 ohne Hochvoltspezifikation.

Bei der Batterieeinheit 1 sind somit die Kontaktschlüsselelemente 4 vorgesehen, welche jeweils einen Kontaktbereich 10 oder mehrere Kontaktbereiche 10 aufweisen und außerhalb des Kontaktbereichs 10 oder der mehreren Kontaktbereiche 10 elektrisch isolierend ausgebildet sind, insbesondere aus Kunststoff. Insbesondere weisen sie ein elektrisch isoliertes Handhabungselement 11 auf, d. h. ein Griffstück zur Handhabung des jeweiligen Kontaktschlüsselelements 4, an welchem es gefahrlos berührt werden kann. Durch Bewegen der Kontaktschlüsselelemente 4 nacheinander in ihre jeweilige Kontaktposition werden die Zellblöcke 2 mittels der Kontaktbereiche 10 zunächst miteinander elektrisch verschaltet und abschließend mit den elektrischen Anschlusskontakten 5 elektrisch kontaktiert.

Ein Bewegen, insbesondere Stecken, der Kontaktschlüsselelemente 4 in eine jeweilige Kontaktposition und ebenso ein entgegengesetztes Bewegen, insbesondere Ziehen, der Kontaktschlüsselelemente 4 aus der jeweiligen Kontaktposition heraus erfolgen vorteilhafterweise von außen, insbesondere von außerhalb der Batterieeinheit 1, beispielsweise außerhalb des Batteriegehäuses oder zumindest außerhalb der Zellblockanordnung der mechanisch bereits miteinander verbundenen Zellblöcke 2. Insbesondere sind dabei die Kontaktbereiche 10 der Kontaktschlüsselelemente 4 und die elektrischen Kontakte der Zellblöcke 2 nicht von außen berührbar, so dass keine Gefahr eines elektrisch leitenden Kontaktes nach außen möglich ist.

Die Kontaktbereiche 10 der Kontaktschlüsselelemente 4 sind frühestens dann von außen berührbar, wenn sie keinen elektrischen Kontakt zu den Zellblöcken 2 mehr aufweisen und somit spannungsfrei sind. Um dies sicherzustellen, ist das jeweilige Kontaktschlüsselelement 4 außerhalb des Kontaktbereichs 10 oder der mehreren Kontaktbereiche 10 elektrisch nicht leitend, d. h. elektrisch isoliert, ausgebildet, beispielsweise aus Kunststoff, wie oben bereits erwähnt. Die elektrischen Kontakte der Zellblöcke 2 sind frühestens dann berührbar, wenn die elektrisch seriellen Verschaltungen der Zellblöcke 2 aufgetrennt sind, so dass an diesen Kontakten eine wesentlich geringere Spannung anliegt, beispielsweise nur die Spannung der elektrisch seriell und/oder parallel miteinander verschalteten Einzelzellen 3 des jeweiligen Zellblocks 2.

Wie in Figur 2 gezeigt, kann das jeweilige Kontaktschlüsselelement 4 beispielsweise derart ausgebildet sein, dass es nur einen Kontaktbereich 10 aufweist, der nur zwei Zellblöcke 2 elektrisch miteinander verbindet, wie am Beispiel der beiden äußeren Kontaktschlüsselelemente 4 gezeigt, oder es weist mehrere Kontaktbereiche 10 auf, wie am Beispiel der beiden inneren Kontaktschlüsselelemente 4 gezeigt. Beispielsweise ist das jeweilige Kontaktschlüsselelement 4 stabförmig ausgebildet, wobei bei mehreren Kontaktbereichen 10 diese in Längsausdehnung des stabförmigen Kontaktschlüsselelementes 4 hintereinander angeordnet sind, oder es ist kammförmig ausgebildet, wobei mehrere Kontaktbereiche 10 kammzinkenartig nebeneinander an einem Kammgrundkörper angeordnet sind, wie am Beispiel des mittleren Kontaktschlüsselelementes 4 gezeigt. Der Kammgrundkörper bildet dabei vorteilhafterweise auch das Handhabungselement 11 des Kontaktschlüsselelementes 4, an welchem es gefahrlos angreifbar und handhabbar ist.

Die elektrisch serielle Verschaltung der Zellblöcke 2 kann beispielsweise durch Stecken der Kontaktschlüsselelemente 4 in linearer Reihenfolge erfolgen, d. h. an einem Ende des jeweiligen Zellblockstrangs 6 beginnend und dann Zellblock 2 nach Zellblock 2 elektrisch verbindend. Hierbei kann es beispielsweise vorgesehen sein, dass das Kontaktschlüsselelement 4 nur einen Kontaktbereich 10 aufweist, welcher nacheinander die Zellblöcke 2 des Zellblockstrangs 6 miteinander elektrisch seriell verschaltet, d. h. den bereits über den Kontaktbereich 10 miteinander elektrisch verbundenen Zellblöcken 2 durch Kontakt des Kontaktbereichs 10 mit den elektrischen Kontakten weiterer Zellblöcke 2 diese weiteren Zellblöcke 2 zur elektrischen Serienverschaltung hinzufügt.

Eine andere Möglichkeit ist eine symmetrische Kontaktierung von Zellblöcken 2 verschiedener nebeneinander angeordneter Zellblockstränge 6. Hierzu weist das stabförmige oder kammförmige Kontaktschlüsselelement 4 mehrere Kontaktbereiche 10 auf, so dass beim Bewegen des Kontaktschlüsselelementes 4 mehrere elektrische Verschaltungen von Zellblöcken 2 mehrerer Zellblockstränge 6 gleichzeitig möglich sind, beispielsweise eine elektrisch serielle Verschaltung zweier Zellblöcke 2 in einem Zellblockstrang 6 mittels eines Kontaktbereichs 10 des Kontaktschlüsselelementes 4 und eine elektrisch serielle Verschaltung zweier Zellblöcke 2 in einem dazu symmetrischen benachbarten Zellblockstrang 6 mittels eines weiteren Kontaktbereichs 10 des Kontaktschlüsselelementes 4.

Alternativ können bei einem solchen symmetrischen Aufbau der Batterieeinheit 1 einzelne Kontaktschlüsselelemente 4 symmetrisch bewegt, insbesondere gesteckt, werden, d. h. in den einzelnen symmetrischen Zellblocksträngen 6 auf gleiche Weise.

Die Kontaktschlüsselelemente 4 sind vorteilhafterweise derart kodiert, dass ein Kontaktschlüsselelement 4 nur zu einer spezifischen Verbindung passt und sich insbesondere aufgrund seiner Form nur in eine entsprechend ausgeformte Ausnehmung einfügen lässt. Beispielsweise weisen die Kontaktschlüsselelemente 4 jeweils eine individuelle Ausformung auf, welche korrespondierend zu einer Aufnahmeausnehmung für das jeweilige Kontaktschlüsselelement 4 ausgebildet ist. Dadurch ist eine falsche Handhabung unterbunden. Zudem kann dies optisch noch durch unterschiedliche Farben und/oder Längen der Kontaktschlüsselelemente 4 hervorgehoben werden.

In Figur 2 sind die äußeren Kontaktschlüsselelemente 4 zwar symmetrisch ausgeführt, aber als einzelne Stäbe. Alternativ können diese Stäbe miteinander verbunden sein, insbesondere U-förmig, beispielsweise über ein als Griffstück ausgebildetes Handhabungselement 11, so dass mittels einer einzelnen Bewegung die elektrischen Verbindungen von Zellblöcken 2 in beiden Zellblocksträngen 6 hergestellt werden können, wie bei dem mittleren Kontaktschlüsselelement 4 gezeigt.

Neben dem oben bereits erläuterten Sicherheitsaspekt aufgrund der reduzierten Spannung, solange die Zellblöcke 2 nicht mittels der Kontaktschlüsselelemente 4 elektrisch seriell verbunden sind, wird durch die beschriebene Lösung auch eine vereinfachte Montage und Fehlerreduzierung erreicht, da die elektrischen Verbindungen zwischen den Zellblöcken 2 nicht bereits während der mechanischen Ausbildung der Zellblockanordnung hergestellt werden müssen und sich dann, nach Fertigstellung der Batterie, möglicherweise als fehlerhaft erweisen, sondern am Ende, als letzter Schritt oder einer der letzten Schritte zur Fertigstellung der Batterie, gesichert erzeugt werden.

Ein wichtiger Aspekt der beschriebenen Lösung ist, dass die elektrische Kontaktierung der Zellblöcke 2 mit den elektrischen Anschlusskontakten 5 als letzter Schritt erfolgt. Dadurch ist eine Spannungsfreiheit an den Anschlusskontakten 5 bis zuletzt sichergestellt. Umgekehrt, d. h. bei einem Auftrennen der elektrischen Verbindungen, wird als erster Schritt die elektrische Kontaktierung der Zellblöcke 2 mit den elektrischen Anschlusskontakten 5 getrennt, so dass zuerst die Spannungsfreiheit an den Anschlusskontakten 5 sichergestellt ist.

Je nach Ausgestaltung kann in einem hier nicht dargestellten Ausführungsbeispiel auch vorgesehen sein, dass nur ein einziges Kontaktschlüsselelement 4 verwendet wird, das über mehrere Kontaktbereiche 10 verfügt, wobei diese derart angeordnet sind, dass die Steckreihenfolge durch eine Einstecktiefe des einen Kontaktschlüsselelementes 4 ersetzt wird. D. h. durch zunehmendes Hineinbewegen in die Zellblockanordnung und somit in verschiedene Kontaktpositionen werden zunehmend mehr Zellblöcke 2 elektrisch seriell miteinander verschaltet und durch ein maximal mögliches Hineinbewegen in eine letzte Kontaktposition werden dann die elektrisch seriell miteinander verschalteten Zellblöcke 2 mit den elektrischen Anschlusskontakten 5 elektrisch verbunden. Hierbei ist vorteilhafterweise der erste Kontaktbereich 10 so groß, dass dieser beim Hineinbewegen und Erreichen einer ersten Kontaktposition einen ersten Kontakt zwischen Zellblöcken 2 herstellt und auch beibehält, während das Kontaktschlüsselelement 4 weiter hineinbewegt wird, d. h. in weitere Kontaktpositionen bewegt wird. Danach werden dann sukzessive weitere Kontakte zwischen weiteren Zellblöcken 2 und zuletzt, bei Erreichen der letzten Kontaktposition, die Anschlusskontakte 5, welche zu Batterieanschlüssen führen, elektrisch kontaktiert. Dadurch ist eine fehlerhafte Handhabung vollständig auszuschließen.

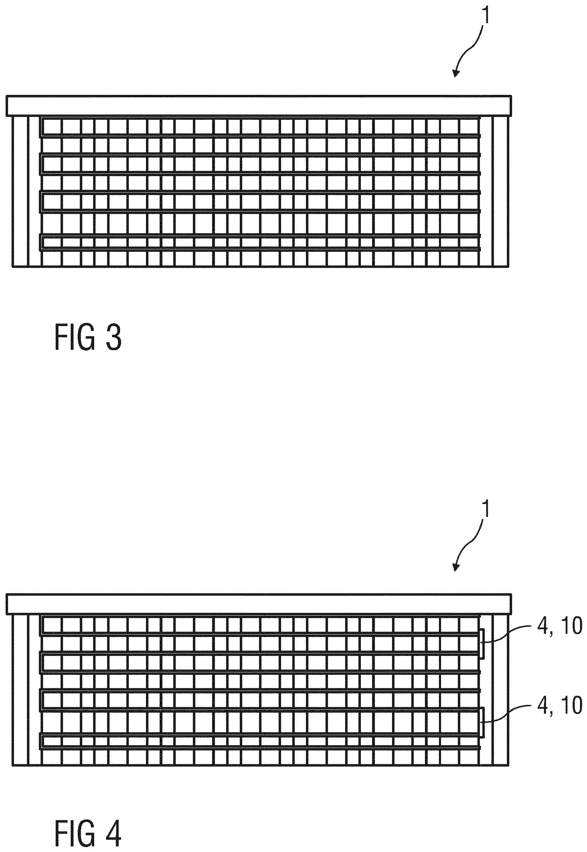

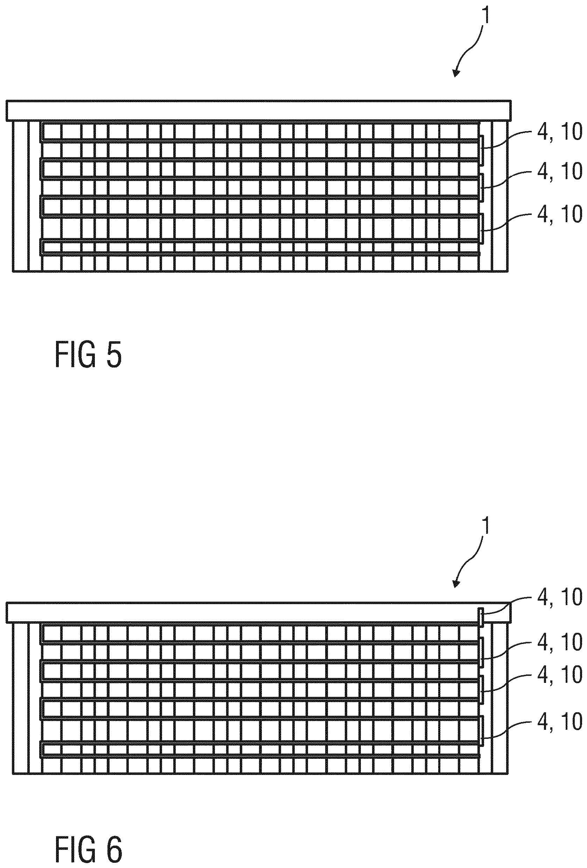

Im hier dargestellten Beispiel werden, ausgehend von den in Figur 3 dargestellten noch nicht elektrisch seriell verschalteten Zellblöcken 2, zunächst mittels der beiden inneren Kontaktschlüsselelemente 4 die oberen Zellblöcke 2 des jeweiligen Zellblockstrangs 6 elektrisch seriell miteinander verschaltet und die unteren Zellblöcke 2 des jeweiligen Zellblockstrangs 6 elektrisch seriell miteinander verschaltet, wie in Figur 4 gezeigt, wobei dies bei den beiden Zellblocksträngen 6 symmetrisch erfolgt. Anschließend werden, wie in Figur 5 gezeigt, mittels der äußeren Kontaktschlüsselelemente 4 alle Zellblöcke 2 des jeweiligen Zellblockstrangs 6 elektrisch seriell miteinander verschaltet, wobei auch dies bei den beiden Zellblocksträngen 6 symmetrisch erfolgt. Abschließend werden mittels des mittleren Kontaktschlüsselelementes 4 die Zellblöcke 2 der beiden Zellblockstränge 6 elektrisch seriell miteinander verbunden und mit den Anschlusskontakten 5 elektrisch kontaktiert, wie in Figur 6 gezeigt.

In einem Verfahren zur elektrischen Verschaltung der Zellblöcke 2 der Batterieeinheit 1 wird somit das eine Kontaktschlüsselelement 4 nacheinander in verschiedene Kontaktpositionen bewegt oder, wie im hier dargestellten Beispiel, die mehreren Kontaktschlüsselelemente 4 werden nacheinander in ihre jeweilige Kontaktposition bewegt, wodurch die Zellblöcke 2 mittels der Kontaktbereiche 10 zunächst miteinander elektrisch verschaltet werden und abschließend mit den elektrischen Anschlusskontakten 5 elektrisch kontaktiert werden.

In umgekehrter Weise, d. h. in einem Verfahren zum Auftrennen der elektrischen Verschaltung der Zellblöcke 2 der Batterieeinheit 1, wird das eine Kontaktschlüsselelement 4 nacheinander aus den verschiedenen Kontaktpositionen entfernt oder, wie im hier dargestellten Beispiel, werden die mehreren Kontaktschlüsselelemente 4 nacheinander aus ihrer jeweiligen Kontaktposition entfernt, wodurch zunächst der elektrische Kontakt der Zellblöcke 2 mit den elektrischen Anschlusskontakten 5 aufgetrennt wird und anschließend die elektrische Verschaltung zwischen den Zellblöcken 2 aufgetrennt wird.

### Daimler AG

### Bezugszeichenliste

- 1: Batterieeinheit
- 2: Zellblock
- 3: Einzelzelle
- 4: Kontaktschlüsselelement
- 5: Anschlusskontakt
- 6: Zellblockstrang
- 7: Verbindungselement
- 8: Kunststoffteil
- 9: Positionierstift
- 10: Kontaktbereich
- 11: Handhabungselement
- 12: Zuganker

## Patentansprüche

1. Batterieeinheit (1), insbesondere für ein Fahrzeug, umfassend mehrere Zellblöcke (2), welche jeweils eine Mehrzahl elektrisch miteinander verschalteter Einzelzellen (3) umfassen, wobei
mehrere Kontaktschlüsselelemente (4) vorgesehen sind, wobei das jeweilige Kontaktschlüsselelement (4) einen Kontaktbereich (10) oder mehrere Kontaktbereiche (10) aufweist und außerhalb des Kontaktbereichs (10) oder der mehreren Kontaktbereiche (10) elektrisch isolierend ausgebildet ist, wobei durch ein Bewegen der Kontaktschlüsselelemente (4) nacheinander in ihre jeweilige Kontaktposition die Zellblöcke (2) mittels der Kontaktbereiche (10) zunächst miteinander elektrisch zu verschalten sind und abschließend mit elektrischen Anschlusskontakten (5) elektrisch zu kontaktieren sind,
**dadurch gekennzeichnet, dass**
die Kontaktschlüsselelemente (4) jeweils eine individuelle Ausformung aufweisen, welche korrespondierend zu einer Aufnahmeausnehmung für das jeweilige Kontaktschlüsselelement (4) ausgebildet ist.

2. Batterieeinheit (1) nach Anspruch 1,
**dadurch gekennzeichnet, dass**
die Zellblöcke (2) durch das Bewegen der Kontaktschlüsselelemente (4) nacheinander in ihre jeweilige Kontaktposition in mehreren Schritten zunehmend elektrisch miteinander zu verschalten sind, wobei in einem letzten Schritt, vor dem elektrischen Kontaktieren mit den elektrischen Anschlusskontakten (5), alle Zellblöcke (2) elektrisch miteinander zu verschalten sind.

3. Batterieeinheit (1) nach einem der vorhergehenden Ansprüche,
**dadurch gekennzeichnet, dass** die Kontaktschlüsselelemente (4) von außen, insbesondere von außerhalb eines Batteriegehäuses oder zumindest von außerhalb der mechanisch miteinander verbundenen Zellblöcke (2), bewegbar sind.

4. Batterieeinheit (1) nach einem der vorhergehenden Ansprüche,
**dadurch gekennzeichnet, dass**
mindestens eines der Kontaktschlüsselelemente (4) stabförmig ausgebildet ist, wobei bei mehreren Kontaktbereichen (10) diese in Längsausdehnung des stabförmigen Kontaktschlüsselelementes (4) hintereinander angeordnet sind, oder dass das Kontaktschlüsselelement (4) oder mindestens eines der Kontaktschlüsselelemente (4) kammförmig ausgebildet ist, wobei mehrere Kontaktbereiche (10) kammzinkenartig nebeneinander an einem Kammgrundkörper angeordnet sind.

5. Batterieeinheit (1) nach einem der vorhergehenden Ansprüche,
**dadurch gekennzeichnet, dass**
die Kontaktschlüsselelemente (4) sich durch eine Farbgebung und/oder eine Länge unterscheiden.

6. Batterieeinheit (1) nach einem der vorhergehenden Ansprüche,
**dadurch gekennzeichnet, dass**
bei mehreren nebeneinander angeordneten symmetrischen Zellblocksträngen (6) symmetrische Kontaktschlüsselelemente (4) für die Zellblockstränge (6) vorgesehen sind.

7. Batterieeinheit (1) nach Anspruch 6,
**dadurch gekennzeichnet, dass**
die symmetrischen Kontaktschlüsselelemente (4) über ein gemeinsames Handhabungselement (11) miteinander verbunden sind.

8. Verfahren zur elektrischen Verschaltung der Zellblöcke (2) der Batterieeinheit (1) nach einem der Ansprüche 1 bis 7, wobei die mehreren Kontaktschlüsselelemente (4) nacheinander in ihre jeweilige Kontaktposition bewegt werden, wodurch die Zellblöcke (2) mittels der Kontaktbereiche (10) zunächst miteinander elektrisch verschaltet werden und abschließend mit den elektrischen Anschlusskontakten (5) elektrisch kontaktiert werden.

9. Verfahren zum Auftrennen einer elektrischen Verschaltung der Zellblöcke (2) der Batterieeinheit (1) nach einem der Ansprüche 1 bis 7, wobei die mehreren Kontaktschlüsselelemente (4) nacheinander aus ihrer jeweiligen Kontaktposition entfernt werden, wodurch zunächst der elektrische Kontakt der Zellblöcke (2) mit den elektrischen Anschlusskontakten (5) aufgetrennt wird und anschließend die elektrische Verschaltung zwischen den Zellblöcken (2) aufgetrennt wird.

## Claims

1. Battery unit (1), in particular for a vehicle, comprising a plurality of cell blocks (2) which each comprise a plurality of electrically interconnected individual cells (3), wherein
a plurality of contact key elements (4) are provided, wherein the corresponding contact key element (4) has a contact region (10) or a plurality of contact regions (10) and is designed to be electrically insulating outside the contact region (10) or the plurality of contact regions (10), wherein, by successively moving the contact key elements (4) into their corresponding contact position, the cell blocks (2) are firstly electrically interconnected by means of the contact regions (10) and are finally electrically contacted with electrical connection contacts (5),
**characterized in that**
the contact key elements (4) each have an individual formation which is designed to correspond to a receiving recess for the corresponding contact key element (4).

2. Battery unit (1) according to claim 1,
**characterized in that,**
by moving the contact key elements (4) successively into their corresponding contact position, the cell blocks (2) are increasingly electrically interconnected in several steps, wherein, in a final step, before the electrical contacting with the electrical connection contacts (5), all cell blocks (2) are electrically interconnected.

3. Battery unit (1) according to any of the preceding claims,
**characterized in that** the contact key elements (4) can be moved from the outside, in particular from outside a battery housing or at least from outside the mechanically interconnected cell blocks (2).

4. Battery unit (1) according to any of the preceding claims,
**characterized in that**
at least one of the contact key elements (4) is rod-shaped, wherein, in the case of a plurality of contact regions (10), these are arranged one behind the other in the longitudinal extension of the rod-like contact key element (4), **or in that** the contact key element (4) or at least one of the contact key elements (4) is comb-shaped, wherein a plurality of contact regions (10) are arranged next to one another in a comb-tooth-like manner on a comb main body.

5. Battery unit (1) according to any of the preceding claims,
**characterized in that**
the contact key elements (4) differ by a coloring and/or a length.

6. Battery unit (1) according to any of the preceding claims,
**characterized in that**
in the case of a plurality of symmetrical cell block strands (6) arranged next to one another, symmetrical contact key elements (4) are provided for the cell block strands (6).

7. Battery unit (1) according to claim 6,
**characterized in that**
the symmetrical contact key elements (4) are interconnected via a common handling element (11).

8. Method for electrically connecting the cell blocks (2) of the battery unit (1) according to any of claims 1 to 7, wherein the plurality of contact key elements (4) are moved successively into their corresponding contact position, as a result of which the cell blocks (2) are initially electrically interconnected by means of the contact regions (10) and are finally electrically contacted with the electrical connection contacts (5).

9. Method for disconnecting an electrical connection of the cell blocks (2) of the battery unit (1) according to any of claims 1 to 7, wherein the plurality of contact key elements (4) are successively removed from their corresponding contact position, as a result of which firstly the electrical contact of the cell blocks (2) with the electrical connection contacts (5) is disconnected and then the electrical connection between the cell blocks (2) is disconnected.

## Revendications

1. Unité de batterie (1), en particulier pour un véhicule, comprenant plusieurs blocs de cellules (2), lesquels comprennent respectivement une pluralité de cellules individuelles (3) connectées électriquement entre elles, dans laquelle
plusieurs éléments clés de contact (4) sont prévus, dans laquelle l'élément clé de contact (4) respectif présente une zone de contact (10) ou plusieurs zones de contact (10) et est réalisé de façon électriquement isolante hors de la zone de contact (10) ou des nombreuses zones de contact (10), dans laquelle, en déplaçant des éléments clés de contact (4) successivement dans leur position de contact respective, les blocs de cellules (2) doivent d'abord être connectés électriquement entre eux par l'intermédiaire des zones de contact (10) et doivent ensuite être mis en contact électrique avec des contacts de raccordement (5) électriques,
**caractérisée en ce que**
les éléments clés de contact (4) présentent respectivement une forme individuelle qui est réalisée de manière correspondante à un évidement de réception pour l'élément clé de contact (4) respectif.

2. Unité de batterie (1) selon la revendication 1,
**caractérisée en ce que**
les blocs de cellules (2) doivent progressivement être connectés électriquement entre eux, en plusieurs étapes, en déplaçant des éléments clés de contact (4) successivement dans leur position de contact respective, dans laquelle, dans une dernière étape avant la mise en contact électrique avec les contacts de raccordement (5) électriques, tous les blocs de cellules (2) doivent être connectés électriquement entre eux.

3. Unité de batterie (1) selon l'une des revendications précédentes,
**caractérisée en ce que** les éléments clés de contact (4) peuvent être déplacés de l'extérieur, en particulier de l'extérieur d'un boîtier de batterie ou au moins de l'extérieur des blocs de cellules (2) reliés mécaniquement entre eux.

4. Unité de batterie (1) selon l'une des revendications précédentes,
**caractérisée en ce que**
au moins l'un des éléments clés de contact (4) est réalisé en forme de barre, dans laquelle, s'il existe plusieurs zones de contact (10), celles-ci sont disposées les unes derrières les autres dans le prolongement longitudinal de l'élément clé de contact (4) en forme de barre, ou **en ce que** l'élément clé de contact (4) ou au moins l'un des éléments clés de contact (4) est réalisé en forme de peigne, dans laquelle plusieurs zones de contact (10) sont disposées sous forme de dents de peigne, côte à côte sur un corps de base de peigne.

5. Unité de batterie (1) selon l'une des revendications précédentes,
**caractérisée en ce que**
les éléments clés de contact (4) se distinguent par une couleur et/ou une longueur.

6. Unité de batterie (1) selon l'une des revendications précédentes,
**caractérisée en ce que**
s'il existe plusieurs brins de blocs de cellules (6) symétriques agencés côte à côte, des éléments clés de contact (4) symétriques sont prévus pour les brins de blocs de cellules (6).

7. Unité de batterie (1) selon la revendication 6,
**caractérisée en ce que**
les éléments clés de contact (4) symétriques sont reliés entre eux par l'intermédiaire d'un élément de maniement (11) commun.

8. Procédé de connexion électrique des blocs de cellules (2) de l'unité de batterie (1) selon l'une des revendications 1 à 7, dans lequel les nombreux éléments clés de contact (4) sont déplacés successivement dans leur position de contact respective, moyennant quoi les blocs de cellules (2) sont d'abord connectés électriquement entre eux par l'intermédiaire des zones de contact (10) et ensuite mis en contact électrique avec les contacts de raccordement (5) électriques.

9. Procédé de rupture d'une connexion électrique des blocs de cellules (2) de l'unité de batterie (1) selon l'une des revendications 1 à 7, dans lequel les nombreux éléments clés de contact (4) sont retirés successivement de leur position de contact respective, moyennant quoi le contact électrique des blocs de cellules (2) avec les contacts de raccordement (5) électriques est d'abord rompu, et la connexion électrique entre les blocs de cellules (2) est ensuite rompue.
